# EUROPÄISCHE PATENTANMELDUNG

(11) **EP 1 366 937 A2**
(43) Veröffentlichungstag der Anmeldung: **03.12.2003**
(21) Anmeldenummer: 03009991.5
(22) Anmeldetag: 02.05.2003
(51) Int. Cl.: B60H 1/22, B60H 1/03

(54) **Elektrische Heizvorrichtung zum Beheizen von Luft, insbesondere für ein Kraftfahrzeug**

(30) Priorität: 31.05.2002 DE 10224265
(71) Anmelder: Behr GmbH & Co., 70469 Stuttgart (DE)
(72) Erfinder: Baruschke, Wilhelm, Dipl.-Ing., 73117 Wangen (DE); Lochmahr, Karl, Dipl.-Ing. (FH), 71665 Vaihingen (DE)
(74) Vertreter: Grauel, Andreas, Dr.

(57) **Zusammenfassung**

Die vorliegende Erfindung betrifft eine luft- und/oder wasserseitige elektrische Heizvorrichtung, insbesondere für ein Kraftfahrzeug. Die erfindungsgemäße elektrische Heizvorrichtung weist elektrische Heizeinrichtungen auf, welche mit Einrichtungen zur Aufnahme eines fluiden Mediums, insbesondere Wasser, und/oder Wärmeaustauscheinrichtungen, insbesondere Wellrippen, thermisch leitend verbunden sind. Die Einrichtung zur Aufnahme des fluiden Mediums steht überdies mit der Wärmeaustauscheinrichtung in thermisch leitendem Kontakt. Als elektrische Heizeinrichtungen kommen vorzugsweise Leistungshalbleiter zum Einsatz, welche durch integrierte oder externe Steuerungs- und/oder Regelungseinrichtungen gesteuert werden.

## Beschreibung

Die vorliegende Erfindung betrifft eine elektrische Heizvorrichtung. Insbesondere betrifft die vorliegende Erfindung eine luft- und/oder wasserseitige elektrische Heizvorrichtung, insbesondere für ein Kraftfahrzeug.

Obwohl die Erfindung im Hinblick auf den Einsatz in einem Kraftfahrzeug beschrieben wird, sei darauf hingewiesen, dass die erfindungsgemäße elektrische Heizvorrichtung auch in anderen Vorrichtungen, wie beispielsweise Raumklimatisierungsvorrichtungen, Klimaschränken oder dergleichen Verwendung finden kann.

Elektrische Heizvorrichtungen finden heute insbesondere in Klimatisierungssystemen, wie beispielsweise in Kraftfahrzeugen oder zur Raumklimatisierung Verwendung. Im Fall eines Kraftfahrzeuges dienen diese Systeme beispielsweise dazu, den Fahrzeuginnenraum zu beheizen.

Insbesondere bei niedrigen Außentemperaturen oder auch sofort nach der Inbetriebnahme des Kraftfahrzeuges bei kaltem Motor besteht heutzutage der Wunsch des Benutzers, dass nach einer möglichst kurzen Zeit die von ihm gewünschte Innenraumtemperatur im Fahrzeug erreicht ist.

Die üblicherweise zur Beheizung des Innenraums eines Kraftfahrzeuges verwendete Abwärme des Motors reicht hierzu, insbesondere bei kaltem Motor, zum Teil nicht aus.

Weiterhin besteht im Hinblick auf die Notwendigkeit der schnellen und gezielten Beheizung des Fahrzeuginnenraums, beispielsweise beim Entfrosten der Fahrzeugscheiben, der Bedarf für die nahezu sofortige Verfügbarkeit hoher Wärmemengen.

Aufgabe der vorliegenden Erfindung ist es deshalb, eine elektrische Heizvorrichtung zur Verfügung zu stellen, welche eine verbesserte Erwärmung eines Wärmeträgers zur Klimatisierung eines Raumes und insbesondere eines Fahrzeuginnenraumes ermöglicht.

Demgemäß weist eine erfindungsgemäße elektrische Heizvorrichtung wenigstens eine Heizeinrichtung auf, welche der Erzeugung von Wärme durch einen die Heizeinrichtung durchfließenden elektrischen Strom dient. Weiterhin weist die erfindungsgemäße elektrische Heizvorrichtung wenigstens eine Wärmeaustauscheinrichtung auf, welche dem Austausch von Wärme mit einem die Wärmeaustauscheinrichtung umströmenden ersten Medium dient. Überdies weist die erfindungsgemäße elektrische Heizvorrichtung wenigstens eine Einrichtung zur Aufnahme eines zweiten Mediums auf, wobei die Einrichtung zur Aufnahme des zweiten Mediums mit der Wärmeaustauscheinrichtung in thermisch leitendem Kontakt steht und wobei die Heizeinrichtung mit der Einrichtung zur Aufnahme des zweiten Mediums und/oder der Wärmeaustauscheinrichtung in thermisch leitendem Kontakt steht.

Die Heizeinrichtung ist hierbei bei einer besonders bevorzugten Ausführungsform zwischen wenigstens zwei im wesentlichen parallel angeordneten Wärmeaustauscheinrichtungen angeordnet. In einer bevorzugten Weiterbildung der vorliegenden Erfindung ist die Heizeinrichtung zwischen wenigstens zwei im wesentlichen parallel zueinander angeordneten Einrichtungen zur Aufnahme des zweiten Mediums angeordnet. Wiederum in einer bevorzugten Weiterbildung der vorliegenden Erfindung ist die Heizeinrichtung zwischen wenigstens einer Wärmeaustauscheinrichtung und einer dazu im wesentlichen parallel angeordneten Einrichtung zur Aufnahme des zweiten Mediums angeordnet.

In einer weiteren Ausführungsform der vorliegenden Erfindung ist die Heizeinrichtung lediglich an eine Einrichtung zur Aufnahme des zweiten Mediums anliegend angeordnet und mit dieser thermisch leitend verbunden.

Vorzugsweise weist das zweite Medium eine höhere Wärmekapazität auf als das erste Medium.

Durch den thermischen Kontakt der Heizeinrichtung mit der Einrichtung zur Aufnahme des zweiten Mediums findet ein Wärmeübergang zwischen der Heizeinrichtung und dem zweiten Medium statt. Durch den thermischen Kontakt der Wärmeaustauscheinrichtung mit der Einrichtung zur Aufnahme des zweiten Mediums findet wiederum ein Wärmeübergang zwischen dem zweiten Medium und der Wärmeaustauscheinrichtung und damit auch dem die Wärmeaustauscheinrichtung umströmende erste Medium statt.

In einer bevorzugten Ausführungsform steht die Heizeinrichtung sowohl mit der Einrichtung zur Aufnahme des zweiten Mediums als auch mit der Wärmeaustauscheinrichtung in thermisch leitendem Kontakt. Hier erfolgt durch eine geeignete Wahl der Wärmekapazitätskoeffizienten des ersten und des zweiten Mediums ein Übergang eines Teils der von der Heizeinrichtung erzeugten Wärme an die Wärmeaustauscheinrichtung sowie gleichzeitig ein Übergang eines weiteren Teils der von der Heizeinrichtung erzeugten Wärme an die Einrichtung zur Aufnahme des zweiten Mediums.

Auf diese Weise kann bei geeigneter Wahl der Wärmekapazitätskoeffizienten gewährleistet werden, dass durch einen Teil der von der Heizeinrichtung erzeugten Wärme eine schnelle Erwärmung des die Wärmeaustauscheinrichtung umströmenden ersten Mediums erfolgt und gleichzeitig durch einen weiteren Teil der von der Heizeinrichtung erzeugten Wärme das zweite Medium erwärmt wird. Das zweite Medium gibt die von ihm aufgenommene Wärme zumindest teilweise wieder an die Wärmeaustauscheinrichtung ab.

Besonders bevorzugt handelt es sich bei dem ersten Medium, welches die Wärmeaustauscheinrichtung umströmt, um ein Gas oder ein Gasgemisch, insbesondere um Luft. Besonders bevorzugte zweite Medien sind Flüssigkeiten oder Flüssigkeitsgemische, wie beispielsweise Wasser, Kühlmittel, ein Wasser-/Kühlmittel-Gemisch oder dergleichen.

Derartige erfindungsgemäße elektrische Heizvorrichtungen zum gleichzeitigen Erwärmen von Luft und Wasser werden auch als luft-/wasserseitige Heizvorrichtungen bezeichnet.

Vorzugsweise ist das erste Medium ein Wärmeträger in einem Raumklimatisierungssystem, insbesondere für ein Kraftfahrzeug.

Die Einrichtung zur Aufnahme des zweiten Mediums weist vorzugsweise mehrere Bereiche auf, von denen beispielsweise wenigstens ein erster Bereich mit wenigstens einer Wärmeaustauscheinrichtung thermisch leitend verbunden ist und dieser erste Bereich mit wenigstens einem zweiten Bereich so in Verbindung steht, dass ein Fluid- bzw. Flüssigkeitsübergang zwischen dem ersten Bereich und dem zweiten Bereich der Einrichtung zur Aufnahme des zweiten Mediums möglich ist.

In einer bevorzugten Ausführungsform weist die Einrichtung zur Aufnahme des zweiten Mediums wenigstens einen Einlauf sowie wenigstens einen Auslauf auf. Besonders bevorzugt sind Ein- und/oder Auslauf hierbei mit dem zweiten Bereich der Einrichtung zur Aufnahme des zweiten Mediums verbunden. Hierdurch besteht die Möglichkeit, der elektrischen Heizvorrichtung das zu erwärmende zweite Medium zuzuführen und das erwärmte zweite Medium abzuführen, um beispielsweise die durch das zweite Medium aufgenommene Wärme für andere Zwecke zur Verfügung zu stellen.

In diesem Fall durchströmt das der elektrischen Heizvorrichtung durch den Einlauf der Einrichtung zur Aufnahme des zweiten Mediums zugeführte zweite Medium die Einrichtung zur Aufnahme des zweiten Mediums und insbesondere die ersten und die zweiten Bereiche mit einer vorgebbaren Strömungsgeschwindigkeit, wobei die Strömungsgeschwindigkeit frei wählbar ist.

In einer Weiterbildung besteht überdies die Möglichkeit, die Wärmeabfuhr aus der elektrischen Heizvorrichtung durch eine Änderung der Strömungsgeschwindigkeit, mit der das zweite Medium die Einrichtung zur Aufnahme des zweiten Mediums durchströmt, zu variieren.

Derartige erfindungsgemäße Heizvorrichtungen ermöglichen eine gleichmäßige Verteilung der von der Heizeinrichtung erzeugten Wärme über einen Teil oder die gesamte Fläche der elektrischen Heizvorrichtung, wodurch vermieden wird, dass im Bereich der Heizeinrichtung eine möglicherweise nicht ausreichend hohe Abfuhr von Wärme durch die Wärmeaustauscheinrichtung bzw. das erste Medium oder das zweite Medium erfolgt.

In einer besonders bevorzugten Ausführungsform der vorliegenden Erfindung weist die Einrichtung zur Aufnahme des zweiten Mediums wenigstens einen im wesentlichen vertikal angeordneten, strömungskanalartigen ersten Bereich auf. Vorzugsweise weist die Einrichtung zur Aufnahme des zweiten Mediums mehrere solche, im wesentlichen parallel angeordnete und im wesentlichen vertikal orientierte strömungskanalartige erste Bereiche auf.

In einer bevorzugten Ausführungsform der vorliegenden Erfindung ist hierbei die Strömungsrichtung des zweiten Mediums in wenigstens zwei verschiedenen Bereichen der Einrichtung zur Aufnahme des zweiten Mediums, beispielsweise in zwei ersten Bereichen, im wesentlichen unterschiedlich, vorzugsweise anti-parallel orientiert.

In einer bevorzugten Ausführungsform sind die Lumina der ersten Bereiche durch einen freien Querschnitt miteinander verbunden. Überdies sind die Lumina der ersten Bereiche mit den Lumina der übrigen Bereiche der Einrichtung zur Aufnahme des zweiten Mediums, vorzugsweise den zweiten Bereichen so verbunden, dass ein Flüssigkeitsdurchtritt zwischen den verschiedenen Bereichen der Einrichtung zur Aufnahme des zweiten Mediums erfolgen kann.

Durch die thermische Verbindung der Einrichtung zur Aufnahme des zweiten Mediums mit der Wärmeaustauscheinrichtung wird Wärme, welche durch das zweite Medium aufgenommen wurde, an die Wärmeaustauscheinrichtung abgegeben und von dieser an das die Wärmeaustauscheinrichtung umströmende erste Medium abgegeben.

Eine elektrische Heizvorrichtung im Sinne der vorliegenden Erfindung ist außerdem dadurch realisiert, dass die Heizeinrichtung mit einer Einrichtung zur Aufnahme des zweiten Mediums in thermisch leitender Verbindung steht, welche außerhalb der erfindungsgemäßen elektrischen Heizvorrichtung angeordnet ist.

Sowohl die ersten als auch die zweiten Bereiche sowie alle weiteren Bereiche der Einrichtung zur Aufnahme des zweiten Mediums können in mehrere Kammern unterteilt sein, zwischen denen ein direkter Flüssigkeitsübergang beispielsweise durch freie Querschnitte möglich sein kann.

In einer bevorzugten Ausführungsform ist in dem Bereich, in dem die Heizeinrichtung, die Wärmeaustauscheinrichtung und/oder die Einrichtung zur Aufnahme des zweiten Mediums miteinander verbunden sind, weiterhin ein Material vorgesehen, welches den Übergang von thermischer Energie zwischen diesen Komponenten, also der Heizeinrichtung, der Wärmeaustauscheinrichtung und/oder der Einrichtung zur Aufnahme des zweiten Mediums, begünstigt.

In einer weiteren Ausführungsform ist in dem Bereich, in dem die Heizeinrichtung, die Wärmeaustauscheinrichtung und/oder die Einrichtung zur Aufnahme des zweiten Mediums miteinander verbunden sind, ein Material vorgesehen, welches die Verbindung der Komponenten zueinander fixiert. In einer Weiterbildung wird die Fixierung der Komponenten zueinander durch eine Verbindungseinrichtung, wie beispielsweise eine Niete, Schraube, Klammer und/oder dergleichen bewirkt.

In einer besonders bevorzugten Weiterbildung der vorliegenden Erfindung erfüllt das Material, welches den Übergang von thermischer Energie zwischen den verbundenen Komponenten begünstigt, gleichzeitig den Zweck der Fixierung der einzelnen Komponenten zueinander.

Vorzugsweise weist die Heizeinrichtung wenigstens ein Halbleiterbauelement auf, welches der Erzeugung von Wärme durch einen das Halbleiterbauelement durchfließenden Strom dient. Das Halbleiterbauelement ist dabei vorzugsweise aus einer Gruppe ausgewählt, welches Transistoren, Feldeffekttransistoren (FET), Metalloxid-Silizium-Feldeffekt-Transistoren (MOSFET), IGBT-Transistoren (Integrated Gate Bipolar Transistor), Thyristoren oder dergleichen enthält.

Vorzugsweise weist das Halbleiterbauelement einen geringen Wärmewiderstand Chip-Bodenplatte (RₜₕJC) auf, besonders bevorzugt einen Wärmewiderstand Chip-Bodenplatte von RₜₕJC < 1 K/W. Besonders bevorzugte Halbleiterbauelemente bieten außerdem die Möglichkeit die Kühlfahne bzw. Bodenplatte des Halbleiterbauelementes mit Source-Potential zu beschalten oder aber potentialfrei zu halten.

Insbesondere die Gewährleistung einer kontinuierlichen Abfuhr von Wärme ermöglicht die Anwendung von Halbleiterbauelementen für die erfindungsgemäße Heizvorrichtung, da es im Falle einer mangelhaften Abfuhr der von der elektrischen Heizeinrichtung erzeugten Wärme zu einer Beschädigung der Heizeinrichtung kommen kann.

Die Wärmeaustauscheinrichtung weist in einer besonders bevorzugten Ausführungsform wenigstens eine Wellrippe, Kühlrippe und/oder Kühllamellen, vorzugsweise eine Vielzahl von Wellrippen, Kühlrippen und/oder Kühllamellen auf.

In einer besonders bevorzugten Ausführungsform der erfindungsgemäßen Heizvorrichtung weist die Heizeinrichtung wenigstens eine Schutzeinrichtung, beispielsweise eine Temperatursicherung, vorzugsweise eine reversible Temperatursicherung, einen Kurzschlussschutz, einen Überspannungsschutz, einen Überlastschutz und/oder dergleichen auf. Vorzugsweise sind derartige Schutzeinrichtungen in das Halbleiterbauelement der Heizeinrichtung integriert.

In einer besonders bevorzugten Ausführungsform sind mehrere Heizeinrichtungen auf einer Leiterplatte angeordnet und dadurch zu Baugruppen zusammengefasst.

In einer weiteren bevorzugten Ausführungsform der vorliegenden Erfindung weist die Heizeinrichtung eine Steuerungs-/Regelungseinrichtung auf. Die Steuerungsund/oder Regelungseinrichtung dient dabei der Steuerung bzw. Beeinflussung, insbesondere der Begrenzung der von der Heizeinrichtung erzeugten Wärmemenge.

Bei einer Weiterbildung der vorliegenden Erfindung ist die Steuerungs- und/oder Regelungseinrichtung nicht in die Heizeinrichtung integriert, sondern davon getrennt, beispielsweise auf einer Leiterplatte, einer Heizeinrichtungsbaugruppe oder in einem anderen Bereich der elektrischen Heizvorrichtung oder außerhalb der Heizvorrichtung angeordnet.

Besonders bevorzugt steht eine einzelne Steuerungs- und/oder Regelungseinrichtung dabei mit mehreren Heizeinrichtungen in Verbindung, so dass eine gleichzeitige Beeinflussung der von mehreren Heizeinrichtungen erzeugten Wärmemenge möglich ist.

Vorzugsweise weist die elektrische Heizvorrichtung wenigstens eine in die Heizeinrichtung integrierte Steuerungs- und/oder Regelungseinrichtung auf sowie eine weitere außerhalb der Heizeinrichtung angeordnete Steuerungs- und/oder Regelungseinrichtung, weiche mit der integrierten Steuerungs- und/oder Regelungseinrichtung einer oder mehrerer Heizeinrichtungen verbunden ist.

Die Steuerungs- und/oder Regelungseinrichtungen können sowohl mehrere kontinuierliche Schaltzustände aufweisen (linearbetrieb) als auch mehrere diskrete Schaltzustände aufweisen (Pulsweitenmodulationsbetrieb).

Bei einer besonders bevorzugten Ausführungsform der vorliegenden Erfindung werden mehrere Heizeinrichtungen durch eine einzelne Steuerungs- und/oder Regelungseinrichtung, beispielsweise eine Mikroprozessoreinrichtung, gesteuert. Die Steuerung erfolgt hierbei beispielsweise durch eine Pulsweitenmodulation, Phasenanschnittsteuerung, Linearsteuerung oder dergleichen.

Eine Steuerung der Heizeinrichtung durch eine derartige Steuerungs- und/oder Regelungseinrichtung erlaubt eine nahezu stufenlose Einstellung der von der Heizeinrichtung zu erzeugenden Wärmemenge.

In einer weiteren bevorzugten Ausführungsform ist jede einzelne Heizeinrichtung mit einer Steuerungs- und/oder Regelungseinrichtung derart verbunden oder versehen, dass die Wärmeerzeugung jeder einzelnen Heizeinrichtung unabhängig von anderen Heizeinrichtungen individuell gesteuert werden kann. Auf diese Weise ist eine Steuerung der Heizleistungsverteilung über die Bereiche der elektrischen Heizvorrichtung möglich.

Die Heizeinrichtung ist mit einer Spannungsquelle, beispielsweise der Batterie eines Kraftfahrzeuges, elektrisch leitend verbunden. Die Heizeinrichtung kann dabei beispielsweise im Kurzschlussbetrieb oder Linearbetrieb und/oder unter Verwendung von Neben- und/oder Vorwiderständen oder dergleichen geschaltet sein.

Besonders bevorzugte Weiterbildungen der vorliegenden Erfindung weisen mehrere Gruppen von Heizeinrichtungen auf, beispielsweise Baugruppen, deren Wärmeabgabe jeweils unabhängig voneinander steuerbar ist.

Weitere Merkmale der vorliegenden Erfindung ergeben sich aus der nachfolgenden detaillierten Beschreibung in Verbindung mit den Ansprüchen und der Zeichnung.

Es zeigen:
- Fig. 1: eine Seitenansicht einer elektrischen Heizvorrichtung gemäß der vorliegenden Erfindung;
- Fig. 2: eine Schnittansicht entlang der Linie A-A' einer elektrischen Heizvorrichtung gemäß Fig. 1;
- Fig. 3: eine Seitenansicht einer weiteren Ausführungsform einer elektrischen Heizvorrichtung gemäß der vorliegenden Erfindung;
- Fig. 4: eine Unteransicht der elektrischen Heizvorrichtung gemäß Fig. 3;
- Fig. 5: eine schematische Darstellung der elektrischen Schaltung einer elektrischen Heizvorrichtung gemäß der vorliegenden Erfindung;
- Fig. 6: eine schematische Darstellung der elektrischen Schaltung einer weiteren Ausführungsform einer elektrischen Heizvorrichtung gemäß der vorliegenden Erfindung;
- Fig. 7: eine schematische Darstellung einer integrierten Heizeinrichtung;
- Fig. 8: eine schematische Darstellung der elektrischen Schaltung einer weiteren Ausführungsform einer elektrischen Heizvorrichtung gemäß der vorliegenden Erfindung.

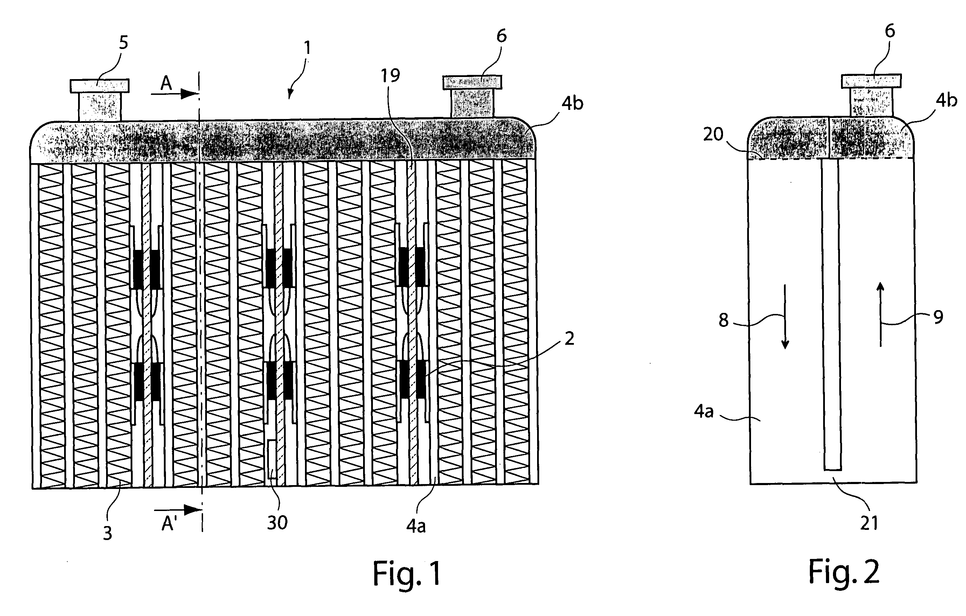

Figur 1 zeigt eine elektrische Heizvorrichtung 1, welche mehrere im wesentlichen parallel zueinander angeordnete Wärmeaustauscheinrichtungen 3 sowie wenigstens eine Einrichtung zur Aufnahme des zweiten Mediums 4 aufweist. Die Einrichtung zur Aufnahme des zweiten Mediums 4 weist wenigstens einen ersten Bereich 4a und wenigstens einen zweiten Bereich 4b auf, wobei die ersten Bereiche 4a im wesentlichen parallel zueinander und im wesentlichen parallel zu den Wärmeaustauscheinrichtungen 3 angeordnet sind. Die Wärmeaustauscheinrichtungen 3 sind mit den ersten Bereichen 4a der Einrichtung zur Aufnahme des zweiten Mediums thermisch leitend verbunden.

Zwischen jeweils einer Wärmeaustauscheinrichtung 3 und einem ersten Bereich 4a der Einrichtung zur Aufnahme des zweiten Mediums ist wenigstens eine Baugruppe angeordnet, welche wenigstens eine Heizeinrichtung 2 aufweist, die auf einer Leiterplatte 19 derart angeordnet ist, dass sie mit der Wärmeaustauscheinrichtung 3 und/oder mit dem ersten Bereich 4a der Einrichtung zur Aufnahme des zweiten Mediums in thermisch leitendem Kontakt steht.

Die in Figur 1 dargestellte elektrische Heizvorrichtung weist drei derartige Baugruppen auf, die jeweils zwischen einer Wärmeaustauscheinrichtung 3 und einer Einrichtung zur Aufnahme des zweiten Mediums 4 angeordnet sind und welche mit einer auf wenigstens einer der Baugruppen angeordneten Steuerungs- und/oder Regelungseinrichtung 30 so verbunden sind (nicht dargestellt), dass die Steuerungsund/oder Regelungseinrichtung 30 eine Steuerung der von den Heizeinrichtungen 2 erzeugten Wärme erlaubt.

Hierbei wird die die Steuerungs- und/oder Regelungseinrichtung 30 aufweisende Baugruppe als Masterbaugruppe bezeichnet; Baugruppen, welche keine Steuerungs- und/oder Regelungseinrichtung 30 aufweisen und durch andere Baugruppen, insbesondere Masterbaugruppen bzw. die darauf angeordneten Steuerungsund/oder Regelungseinrichtungen gesteuert werden, werden als so genannte Slave-Baugruppen bezeichnet.

Gemäß Figur 1 weist die elektrische Heizvorrichtung 1 einen zweiten Bereich 4b der Einrichtung zur Aufnahme des zweiten Mediums auf, welcher mit dem ersten Bereich 4a derart verbunden ist, dass ein Fluidübergang vom zweiten Bereich 4b der Einrichtung zur Aufnahme des zweiten Mediums in den ersten Bereich 4a erfolgen kann.

Überdies weist die elektrische Heizvorrichtung 1 wenigstens einen Einlauf 5 und wenigstens einen Auslauf 6 auf, der mit dem zweiten Bereich 4b der Einrichtung zur Aufnahme des zweiten Mediums derart verbunden ist, dass ein Fluid durch den Einlauf 5 in den zweiten Bereich 4b der Einrichtung zur Aufnahme des zweiten Mediums eintreten kann. Ebenso kann ein Fluidaustritt aus dem zweiten Bereich 4b durch den Auslauf 6 erfolgen, so dass der elektrischen Heizvorrichtung 1 durch den

Einlauf 5 eine Flüssigkeit zugeführt werden kann, welche den zweiten Bereich 4b sowie den ersten Bereich 4a der Einrichtung zur Aufnahme des zweiten Mediums durchströmt und der elektrischen Heizvorrichtung durch den Auslauf 6 wieder entnommen werden kann.

Vorzugsweise ist eine derartige elektrische Heizvorrichtung 1 in einem Kreislaufsystem angeordnet, in dem eine Erwärmung des zweiten Mediums gewünscht ist.

Figur 2 stellt eine Schnittansicht der elektrischen Heizvorrichtung gemäß Figur 1 entlang der Schnittlinie A-A' dar. Gemäß Figur 2 sind die Lumina, also die das zweite Medium aufweisenden Hohlräumen der ersten und zweiten Bereiche der Einrichtung zur Aufnahme des zweiten Mediums 4 so miteinander verbunden, dass ein Fluidübergang vom ersten Bereich 4a zum zweiten Bereich 4b der Einrichtung zur Aufnahme des zweiten Mediums und umgekehrt möglich ist.

Der Übergangsbereich weist dabei eine netz- bzw. gitterförmige Struktur 20 auf, die einerseits der Stabilisierung der elektrischen Heizvorrichtung dient und andererseits im zweiten Medium vorhandene Schmutzpartikel oder Fremdkörper zurückhält.

Figur 2 zeigt weiterhin, dass der zweite Bereich 4b der Einrichtung zur Aufnahme des zweiten Mediums in mehrere Kammern unterteilt sein kann, wobei diese Kammern derart voneinander getrennt sein können, dass kein direkter Fluidübergang zwischen den Kammern möglich ist. Ebenso kann der erste Bereich 4a der Einrichtung zur Aufnahme des zweiten Mediums in mehrere Kammern unterteilt sein, die vorzugsweise durch einen freien Querschnitt 21 derart miteinander verbunden sind, dass ein Fluidübergang zwischen den Kammern des ersten Bereiches 4a der Einrichtung zur Aufnahme des zweiten Mediums möglich ist.

Die Strömungsrichtung 9 in einer zweiten Kammer des ersten Bereiches 4a und/oder des zweiten Bereiches 4b der Einrichtung zur Aufnahme des zweiten Mediums ist dabei im wesentlichen unterschiedlich, vorzugsweise anti-parallel zur Strömungsrichtung 8 in einer ersten Kammer des ersten Bereiches 4a und/oder des zweiten Bereiches 4b der Einrichtung zur Aufnahme des zweiten Mediums orientiert.

Bei dem zweiten Medium handelt es sich vorzugsweise um ein Fluid, insbesondere Wasser, Kühlmittel, Wasser-Kühlmittelgemische oder dergleichen.

Die Wärmeaustauscheinrichtung 3 der erfindungsgemäßen elektrischen Heizvorrichtung 1 weist vorzugsweise wenigstens eine Wellrippe, ein Kühlblech und/oder eine Kühllamelle auf.

Besonders bevorzugt wird die Wärmeaustauscheinrichtung von einem ersten Medium, vorzugsweise einem fluiden Medium wie beispielsweise einem Gas, Gasgemisch, Dampf und/oder dergleichen zumindest teilweise laminar oder turbulent umströmt bzw. durchströmt.

Die ersten Bereiche 4a der Einrichtung zur Aufnahme des zweiten Mediums sind vorzugsweise strömungskanalförmig ausgeführt, besonders bevorzugt weisen die ersten Bereiche der Einrichtung zur Aufnahme des zweiten Mediums 4a einen im wesentlichen rechteckigen, quadratischen, runden, ovalen und/oder polygonförmigen Querschnitt auf.

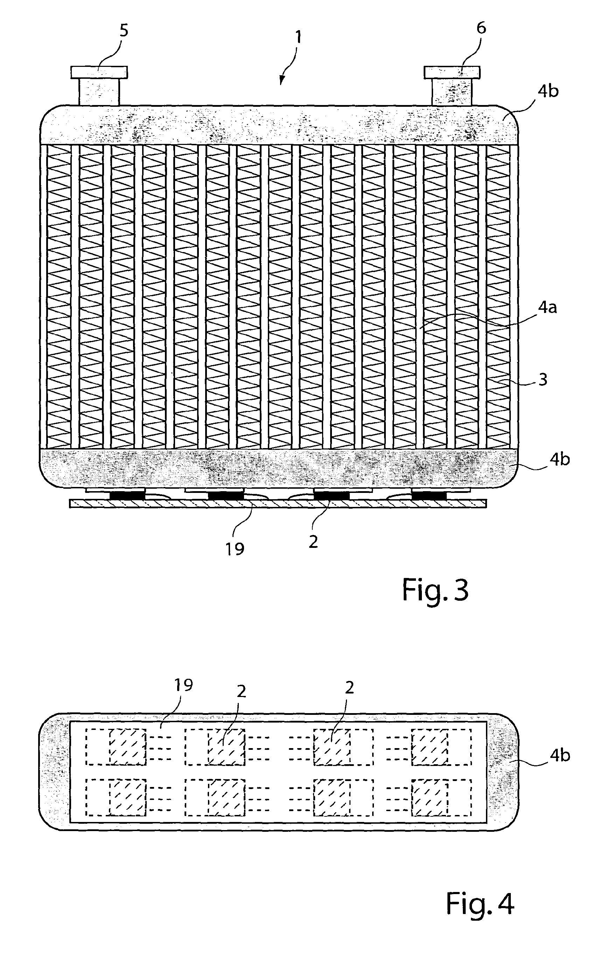

Gemäß Figur 3 weist die elektrische Heizvorrichtung 1 mehrere im wesentlichen parallel angeordnete Wärmeaustauscheinrichtungen 3 sowie mehrere im wesentlichen parallel zueinander und zu den Wärmeaustauscheinrichtungen angeordnete erste Bereiche 4a der Einrichtung zur Aufnahme des zweiten Mediums auf. Die ersten Bereiche 4a sind mit den Wärmeaustauscheinrichtungen thermisch leitend verbunden.

Überdies weist die elektrische Heizvorrichtung 1 gemäß Figur 3 zwei zweite Bereiche 4b der Einrichtung zur Aufnahme des zweiten Mediums auf, wobei wenigstens einer dieser zweiten Bereiche 4b der Einrichtung zur Aufnahme des zweiten Mediums einen Einlauf 5 sowie einen Auslauf 6 aufweist, so dass ein Fluidein- bzw. Fluidaustritt in bzw. aus dem zweiten Bereich 4b der Einrichtung zur Aufnahme des zweiten Mediums erfolgen kann.

Die Lumina der ersten und zweiten Bereiche der Einrichtung zur Aufnahme des zweiten Mediums sind derart miteinander verbunden, dass ein Fluidübergang zwischen den ersten und den zweiten Bereichen 4a, 4b der Einrichtung zur Aufnahme des zweiten Mediums möglich ist. Überdies können sowohl erste als auch zweite Bereiche der Einrichtung zur Aufnahme des zweiten Mediums in mehrere Kammern unterteilt sein, welche durch freie Querschnitte miteinander in Verbindung stehen können, so dass ein Fluidübergang zwischen den Kammern möglich ist.

Gemäß Figur 3 sind bei einer weiteren Ausführungsform der vorliegenden Erfindung auf einer Leiterplatte 19 angeordnete Heizeinrichtungen 2 zu einer Baugruppe zusammengefasst. Die Heizeinrichtungen 2 stehen hierbei mit dem zweiten Bereich 4b der Einrichtung zur Aufnahme des zweiten Mediums in einer thermisch leitenden Verbindung. Auf diese Weise kann ein Wärmeaustausch zwischen den Heizeinrichtungen 2 und dem zweiten Medium, welches die elektrische Heizvorrichtung 1 gemäß Figur 1 vorzugsweise durchströmt, erfolgen.

Die Wärmeaustauscheinrichtungen 3 der elektrischen Heizvorrichtung 1 werden von dem ersten Medium derart umströmt, dass ein Wärmeübergang zwischen der Wärmeaustauscheinrichtung 3 und dem ersten Medium erfolgt. Durch die thermisch leitende Verbindung zwischen der Wärmeaustauscheinrichtung 3 und der Einrichtung zur Aufnahme des zweiten Mediums 4 kann ein Wärmeübergang zwischen dem zweiten Medium und dem ersten Medium erfolgen.

Figur 4 zeigt eine elektrische Heizvorrichtung 1 gemäß Figur 3 in einer Unteransicht, wobei die Anordnung der Heizeinrichtung 2 auf der Leiterplatte 19 bzw. bezüglich des zweiten Bereichs 4b der Einrichtung zur Aufnahme des zweiten Mediums verdeutlicht wird.

Bei den erfindungsgemäßen elektrischen Heizvorrichtungen gemäß den Figuren 1 bis 4 kommen als Heizeinrichtungen vorzugsweise Leistungshalbleiter, insbesondere Leistungstransistoren zum Einsatz. Die verwendeten Leistungshalbleiter haben vorzugsweise eine Gehäusebauform, welche eine metallische Bodenplatte aufweist, die für die thermische Verbindung mit den Komponenten der elektrischen Heizvorrichtung 1, insbesondere der Wärmeaustauscheinrichtung 3 und der Einrichtung zur Aufnahme des zweiten Mediums 4 besonders vorteilhaft ist. Beispielsweise weisen die verwendeten Leistungshalbleiter ein TO-220-Gehäuse auf.

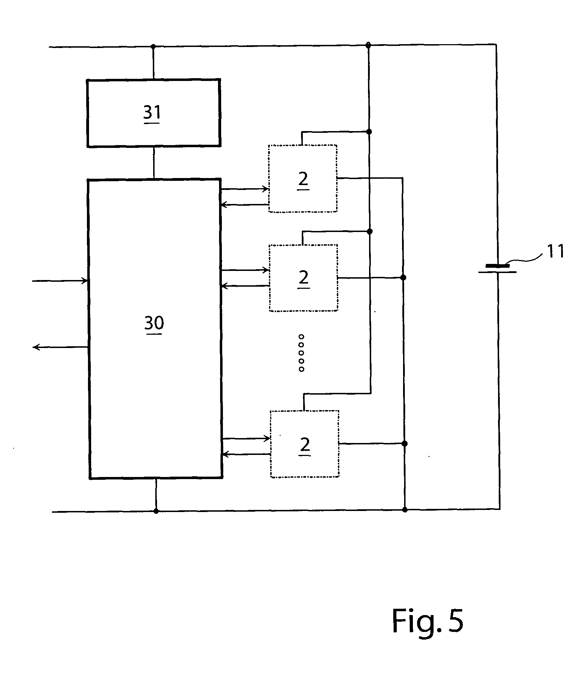

In den Figuren 1 bis 4 sind keine elektrischen Verbindungen und Kontaktierungen der Heizeinrichtungen mit der oder den Steuerungs- und/oder Regelungseinrichtungen oder anderen elektrischen Komponenten gezeigt. Hierzu sei auf die nachfolgend Figurenbeschreibung der Figuren 5 bis 8 verwiesen.

Demgemäß zeigt Figur 5 schematischen einen elektrischen Schaltplan, wie er in einer Ausführungsform der vorliegenden Erfindung realisiert ist. Hierbei sind die Heizeinrichtungen 2 mit einer Steuerungs- und/oder Regelungseinrichtung 30 derart verbunden, dass eine bidirektionale Signalübertragung zwischen der Steuerungsund/oder Regelungseinrichtung 30 und den Heizeinrichtungen 2 erfolgen kann. Bei der Steuerungs- und/oder Regelungseinrichtung 30 handelt es sich vorzugsweise um eine Mikroprozessor-gesteuerte Einrichtung. Es besteht überdies die Möglichkeit des Einsatzes einer analogen Steuerungs- und/oder Regelungseinrichtung.

Die Steuerungs- und/oder Regelungseinrichtung 30 steht über wenigstens eine bidirektionale oder wenigstens zwei unidirektionale Verbindung/en mit weiteren Schalt-, Steuer-, Regel-, Anzeige- oder Ausgabeelementen (nicht dargestellt) in Verbindung.

Wie in Figur 5 gezeigt, stehen die Heizeinrichtungen 2 mit einer Spannungsquelle 11, beispielsweise dem Bordnetz eines Kraftfahrzeuges, in elektrisch leitendem Kontakt. Für die Spannungsquelle der Mikroprozessor-gesteuerten Steuerungsund/oder Regelungseinrichtung 30 kommt weiterhin eine Konstantspannungsquelle 31 zum Einsatz, welche mit der Steuerungs- und/oder Regelungseinrichtung 30 elektrisch leitend verbunden ist. Die Konstantstrom- bzw. Konstantspannungsquelle 31 und die Steuerungs- und/oder Regelungseinrichtung 30 sind überdies, wie dargestellt, mit der Strom-/Spannungsquelle 11 elektrisch leitend verbunden.

Die in Figur 5 dargestellte elektrische Schaltung erlaubt eine individuelle und unabhängige Steuerung jeder einzelnen Heizeinrichtung 2 durch die Steuerungsund/oder Regelungseinrichtung 30.

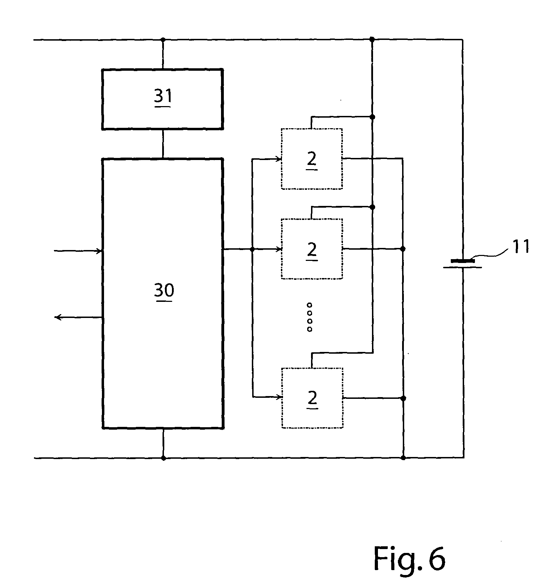

Bei der in Figur 6 dargestellten elektrischen Schaltung, welche in einer weiteren Ausführungsform der erfindungsgemäßen elektrischen Heizvorrichtung 1 zum Einsatz kommt, sind die Heizeinrichtungen 2 mit der Steuerungs- und/oder Regelungseinrichtung 30 derart verbunden, dass eine parallele und gleichzeitige Steuerung aller Heizeinrichtungen 2 durch die Steuerungs- und/oder Regelungseinrichtung erfolgt.

Zwischen der Steuerungs- und/oder Regelungseinrichtung 30 und den Heizeinrichtungen 2 besteht lediglich eine unidirektionale Verbindung, die die Steuerung der von den Heizeinrichtungen erzeugten Wärme ermöglicht. Bei einer derartigen elektrischen Schaltung kann beispielsweise durch eine Pulsweitenmodulations-Steuerung die Heizleistung aller Heizeinrichtungen 2 gleichzeitig und nahezu stufenlos erfolgen.

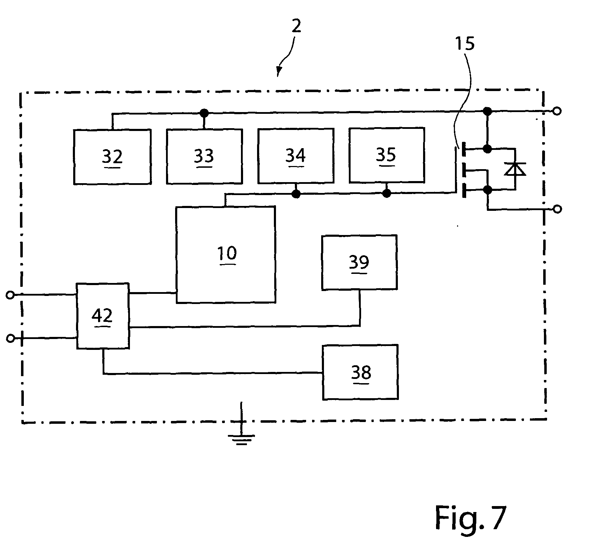

Figur 7 stellt schematisch den Aufbau einer integrierten Heizeinrichtung 2 dar. Demgemäß weist die Heizeinrichtung 2 einen Leistungshalbleiter 15, besonders bevorzugt einen Transistor, Feldeffekttransistor, Metalloxidsilizium-Feldeffekttransistor oder einen IGBT-Transistor auf.

Der Leistungshalbleiter 15 ist hierbei mit einer elektrischen Spannungsversorgung 11, beispielsweise dem Bordnetz eines Kraftfahrzeuges, verbunden. Des weiteren weist die Heizeinrichtung 2 eine Überspannungsschutzeinrichtung 33 sowie eine Strombegrenzungseinrichtung 34 auf, welche den Leistungshalbleiter vor einer Beschädigung durch Überstrom oder Überspannung schützen. Überdies weist die Heizeinrichtung 2 einen Temperatursensor 39 sowie einen Kurzschlusssensor 38 auf, die mit der Steuerungslogik 42 der Heizeinrichtung derart verbunden sind, dass eine Überlastung oder Überhitzung der Heizeinrichtung 2 vermieden werden kann.

Die Steuerungslogik 42 der Heizeinrichtung 2 steht über wenigstens einen Anschluss mit weiteren Schalt-, Steuer-, Regel-, Bearbeitungs-, Eingabe- und/oder Ausgabeelementen (nicht dargestellt) in Verbindung. Die Steuerungslogik 42 steuert über die Strom- und/oder Spannungsregelungseinrichtung 10 den durch den Leistungshalbleiter 15 fließenden elektrischen Strom.

Selbstverständlich können weitere Ausführungsformen von integrierten Heizeinrichtungen nur einen Teil der beschriebenen Komponenten aufweisen, wie zum Beispiel lediglich eine Strombegrenzungseinrichtung oder eine Übertemperaturschutzeinrichtung.

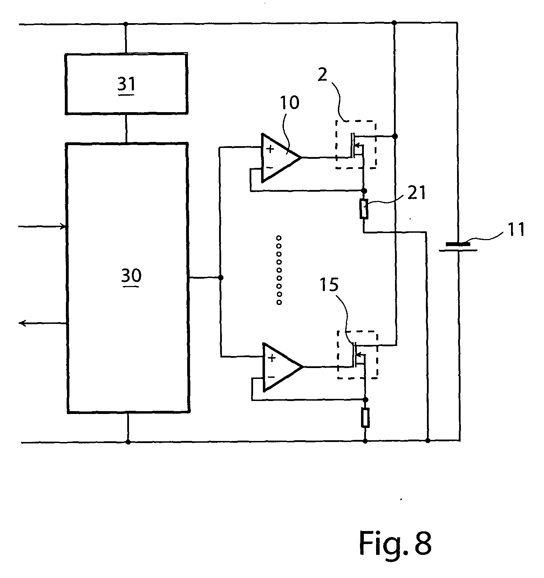

Figur 8 zeigt schematisch eine elektrische Schaltung einer weiteren Ausführungsform einer elektrischen Heizvorrichtung 1 gemäß der vorliegenden Erfindung, welche ebenso wie die in Figur 6 dargestellte Schaltanordnung eine parallele und gleichzeitige Steuerung der Heizeinrichtungen 2, welche Leistungshalbleiter 15 aufweisen, erlaubt.

Die Steuerungs- und/oder Regelungseinrichtung 30 ist mit wenigstens einer Stromregelungseinrichtung elektrisch leitend verbunden. Die Stromregelungseinrichtung dient (im Linearbetrieb) der Steuerung des Stromflusses durch den jeweiligen Leistungshalbleiter 15. Sie besteht im wesentlichen aus einem Linearverstärker 10 sowie einem Widerstand 21, der als Strommeßwiderstand dient und durch den der durch den Leistungshalbleiter fließende Strom bestimmt wird.

## Patentansprüche

1. Elektrische Heizvorrichtung, insbesondere für ein Kraftfahrzeug
mit wenigstens einer Heizeinrichtung (2), welche der Erzeugung von Wärme durch einen die Heizeinrichtung durchfließenden elektrischen Strom dient,
wenigstens einer Wärmeaustauscheinrichtung (3), welche dem Austausch von Wärme mit einem die Wärmeaustauscheinrichtung umströmenden ersten Medium dient,
wenigstens einer Einrichtung (4), welche der Aufnahme eines zweiten Mediums dient,
**dadurch gekennzeichnet, dass**
die Wärmeaustauscheinrichtung und/oder die Einrichtung zur Aufnahme des zweiten Mediums mit der Heizeinrichtung in thermisch leitendem Kontakt steht, und
die Wärmeaustauscheinrichtung mit der Einrichtung zur Aufnahme des zweiten Mediums in thermisch leitendem Kontakt steht.

2. Elektrische Heizvorrichtung gemäß Anspruch 1,
**dadurch gekennzeichnet, dass**
die Heizeinrichtung (2) ein Halbleiterbauelement (15) aufweist, vorzugsweise ein Leistungshalbleiter-Bauelement aufweist, welches in Abhängigkeit des die Heizeinrichtung durchfließenden elektrischen Stromes Wärme erzeugt, wobei das Halbleiterbauelement vorzugsweise aus einer Gruppe ausgewählt ist, die Transistoren, FeldeffektTransistoren (FET), Metalloxid-Silizium-Feldeffekt-Transistoren (MOSFET), IGBT-Transistoren (Integrated Gate Bipolar Transistor), Thyristoren oder dergleichen enthält.

3. Elektrische Heizvorrichtung gemäß Anspruch 1 oder Anspruch 2,
**dadurch gekennzeichnet, dass**
die Einrichtung zur Aufnahme des zweiten Mediums (4) erste Bereiche (4a) und zweite Bereiche (4b) aufweist.

4. Elektrische Heizvorrichtung gemäß wenigstens einem der vorstehenden Ansprüche,
**dadurch gekennzeichnet, dass**
die Heizeinrichtung (2) zwischen wenigstens zwei Wärmeaustauscheinrichtungen (3) angeordnet ist, oder
die Heizeinrichtung zwischen wenigstens zwei Einrichtungen zur Aufnahme des zweiten Mediums (4)angeordnet ist, vorzugsweise zwischen zwei ersten Bereichen (4a) angeordnet ist, oder
die Heizeinrichtung zwischen wenigstens einer Einrichtung zur Aufnahme des zweiten Mediums, vorzugsweise einem ersten Bereich (4a) und wenigstens einer Wärmeaustauscheinrichtung angeordnet ist.

5. Elektrische Heizvorrichtung gemäß wenigstens einem der vorstehenden Ansprüche,
**dadurch gekennzeichnet, dass**
die Einrichtung zur Aufnahme des zweiten Mediums (4), vorzugsweise der zweite Bereich (4b), wenigstens einen Einlauf (5) und wenigstens einen Auslauf (6) aufweist.

6. Elektrische Heizvorrichtung gemäß wenigstens einem der vorstehenden Ansprüche,
**dadurch gekennzeichnet, dass**
das zweite Medium die Einrichtung zur Aufnahme des zweiten Mediums (4), vorzugsweise erste und zweite Bereiche (4a, 4b) durchströmt.

7. Elektrische Heizvorrichtung gemäß wenigstens einem der vorstehenden Ansprüche,
**dadurch gekennzeichnet, dass**
die Wärmetauscheinrichtung (3) wenigstens eine Wellrippe, Kühlrippe und/oder Kühllamelle aufweist.

8. Elektrische Heizvorrichtung gemäß wenigstens einem der vorstehenden Ansprüche,
**dadurch gekennzeichnet, dass**
das erste Medium eine geringere Wärmekapazität aufweist als das zweite Medium.

9. Elektrische Heizvorrichtung gemäß wenigstens einem der vorstehenden Ansprüche,
**dadurch gekennzeichnet, dass**
die Heizeinrichtung (2) wenigstens eine Schutzeinrichtung aufweist, vorzugsweise eine Einrichtung zum Schutz gegen ein Überhitzen, eine Einrichtung zum Schutz gegen eine Überlastung, eine Überstrom-Schutzeinrichtung und/oder dergleichen aufweist.

10. Elektrische Heizvorrichtung gemäß wenigstens einem der vorstehenden Ansprüche,
**dadurch gekennzeichnet, dass**
im Verbindungsbereich der Heizeinrichtung (2) mit der Wärmeaustauscheinrichtung (3), der Heizeinrichtung mit der Einrichtung zur Aufnahme des zweiten Mediums (4) und/oder der Wärmeaustauscheinrichtung mit der Einrichtung zur Aufnahme des zweiten Mediums, vorzugsweise dem ersten Bereich (4a), ein Material vorgesehen ist, welches den Übergang thermischer Energie zwischen diesen Einrichtungen begünstigt.

11. Elektrische Heizvorrichtung gemäß wenigstens einem der vorstehenden Ansprüche,
**dadurch gekennzeichnet, dass**
die Verbindung der Heizeinrichtung (2) mit der Wärmeaustauscheinrichtung (3), der Heizeinrichtung mit der Einrichtung (4) zur Aufnahme des zweiten Mediums und/oder der Einrichtung zur Aufnahme des zweiten Mediums mit der Wärmeaustauscheinrichtung durch eine Verbindungseinrichtung oder ein Verbindungsmaterial fixiert ist.

12. Elektrische Heizvorrichtung gemäß wenigstens einem der vorstehenden Ansprüche,
**dadurch gekennzeichnet, dass**
die Strömungsrichtung (8, 9) des zweiten Mediums in wenigstens zwei ersten und/oder zweiten Bereichen der Einrichtung (4a, 4b) zur Aufnahme des zweiten Mediums im wesentlichen unterschiedlich orientiert ist, vorzugsweise antiparallel orientiert ist.

13. Elektrische Heizvorrichtung gemäß wenigstens einem der vorstehenden Ansprüche,
**dadurch gekennzeichnet, dass**
das zwischen der Einrichtung zur Aufnahme des zweiten Mediums (4) und dem zweiten Medium ein Übergang von thermischer Energie stattfindet.

14. Elektrische Heizvorrichtung gemäß wenigstens einem der vorstehenden Ansprüche,
**dadurch gekennzeichnet, dass**
der erste Bereich (4a) der Einrichtung zur Aufnahme des zweiten Mediums strömungskanalartig ausgeführt ist, vorzugsweise einen rechtekkigen, quadratischen, runden, ovalen und/oder polygonförmigen Querschnitt aufweist.

15. Elektrische Heizvorrichtung gemäß wenigstens einem der vorstehenden Ansprüche,
**dadurch gekennzeichnet, dass**
das zweite Medium eine definierte Wärmekapazität aufweist.

16. Elektrische Heizvorrichtung gemäß wenigstens einem der vorstehenden Ansprüche,
**dadurch gekennzeichnet, dass**
die Geschwindigkeit mit der das zweite Medium die Einrichtung zur Aufnahme des zweiten Mediums (4) durchströmt frei wählbar ist.

17. Elektrische Heizvorrichtung gemäß wenigstens einem der vorstehenden Ansprüche,
**dadurch gekennzeichnet, dass**
die Heizeinrichtung (2) eine Steuerungs- und/oder Regelungseinrichtung (10) aufweist, wobei die Steuerungs- und/oder Regelungseinrichtung die von der Heizeinrichtung erzeugte Wärmemenge beeinflusst.

18. Elektrische Heizvorrichtung gemäß wenigstens einem der vorstehenden Ansprüche,
**dadurch gekennzeichnet, dass**
wenigstens eine Heizeinrichtung (2) mit einer Steuerungs- und/oder Regelungseinrichtung (10) direkt oder indirekt verbunden ist, wobei die Steuerungs- und/oder Regelungseinrichtung die von der Heizeinrichtung abgegebene Wärmemenge beeinflusst.

19. Elektrische Heizvorrichtung gemäß wenigstens einem der vorstehenden Ansprüche,
**dadurch gekennzeichnet, dass**
die Steuerungs- und/oder Regelungseinrichtung (10) diskrete Schaltzustände aufweist.

20. Elektrische Heizvorrichtung gemäß wenigstens einem der vorstehenden Ansprüche,
**dadurch gekennzeichnet, dass**
die Steuerungs- und/oder Regelungseinrichtung (10) zumindest teilweise kontinuierliche Schaltzustände aufweist.

21. Elektrische Heizvorrichtung gemäß wenigstens einem der vorstehenden Ansprüche,
**dadurch gekennzeichnet, dass**
die Steuerungs- und/oder Regelungseinrichtung (10) eine Einrichtung zur Pulsweitenmodulation aufweist.

22. Elektrische Heizvorrichtung gemäß wenigstens einem der vorstehenden Ansprüche,
**dadurch gekennzeichnet, dass**
die Heizeinrichtung (2) mit wenigstens einer elektrischen Spannungsquelle elektrisch leitend verbunden ist.

23. Elektrische Heizvorrichtung gemäß wenigstens einem der vorstehenden Ansprüche,
**dadurch gekennzeichnet, dass**
das erste Medium ein Fluid ist, insbesondere ein Gas oder Gasgemisch ist, vorzugsweise Luft ist, und
das zweite Medium ein Fluid ist, insbesondere eine Flüssigkeit oder ein Flüssigkeitsgemisch ist, vorzugsweise Wasser ist.

24. Einrichtung zum Beheizen von Luft, insbesondere für ein Kraftfahrzeug mit Luftströmungswegen, Luftströmungssteuerelementen und wenigstens einer Luftfördereinrichtung und einem Gehäuse, welches eine elektrische Heizvorrichtung gemäß wenigstens einem der vorstehenden Ansprüche aufweist, oder welche zur Aufnahme wenigstens einer solchen elektrischen Heizvorrichtung
